# EUROPÄISCHE PATENTSCHRIFT

(11) **EP 0 339 476 B1**
(45) Veröffentlichungstag und Bekanntmachung des Hinweises auf die Patenterteilung: **26.01.1994**
(21) Anmeldenummer: 89107070.8
(22) Anmeldetag: 19.04.1989
(51) Int. Cl.: H04Q 11/04, H04M 3/50, H04L 12/54, H04L 12/58

(54) **Verfahren und Vorrichtung zur Bildung elektronischer, aus Sprach- und Nichtsprachbestandteilen bestehender Kommunikationsdienstnachrichten**
Method and device for the institution of electronic communication service messages composed of speech and non-speech components
Méthode et dispositif pour former des messages de service de communication électroniques composés de parties vocales et non vocales

(30) Priorität: 29.04.1988 DE 3814658
(43) Veröffentlichungstag der Anmeldung: 02.11.1989
(73) Patentinhaber: SIEMENS AKTIENGESELLSCHAFT, 80333 München (DE)
(72) Erfinder: Frantzen, Viktor, D-8000 München 71 (DE); Gösswein, Hans Martin, D-8000 München 83 (DE)

(56) Entgegenhaltungen:
- EP-A- 0 309 993
- EP-A- 0 339 467
- WO-A-80/01349
- WO-A-87/07801
- IEEE GLOBAL TELECOMMUNICATIONS CONFERENCE, 2. - 5. Dezember 1985, Band 1, Paper 12.5, Seiten 363-367, New Orleans, US; CHIAZIGLIONE et al.: "Multimediacommunication at the basis ISDN access"
- AT&T TECHNOLOGY, Band. 2, Nr.3, 1987, Seiten 4-13; TIMKO: "AT&T Systems architecture"
- THE INTERNATIONAL SYMPOSIUM ON SUBSCRIBER LOOPS AND SERVICES, 11. - 16. September 1988, Seiten 123-127, Boston, US; YAMAGUCHI et al.: "Experimental ISDN system with multimedia storage and intelligent service control capabilities"
- IEEE INTERNATIONAL CONFERENCE ON COMMUNICATION, Juni 1985, Band 1, paper 13.2, Seiten 379-384, Chicago, US; BOLEDA et al.: "The impact of new technologies on Northern telecom's office communications architecture"
- AT&T TECHNOLOGY, Band 1, Nr. 1, 1986, Seiten 26-35, New York, US; HUBER et al.: "Getting the message with UMS"

## Beschreibung

Die Erfindung betrifft ein Verfahren und eine Vorrichtung zur Bildung elektronischer, aus Sprach- und Nichtsprachbestandteilen bestehender Kommunikationsdienstnachrichten in einer Kommunikationsdienstvermittlungsanlage mit internen Sprachendgeräten und internen Datenendgeräten, wobei jeweils ein internes Sprachendgerät und mindestens ein internes Datenendgerät mit einer gemeinsamen internen Teilnehmeranschlußschaltung verbunden und über eine gemeinsame Rufnummer anwählbar sind, mit den internen Sprachendgeräten und den internen Datenendgeräten zugeordneten Speichereinrichtungen und mit einer den Speichereinrichtungen zugeordneten ersten Steuerung, wobei die Kommunikationsdienstvermittlungsanlage über mindestens eine Amtsleitung mit externen Sprachendgeräten und externen Datenendgeräten verbindbar ist, wobei in die Speichereinrichtungen Sprach- und Datennachrichten von internen und/oder externen Sprachendgeräten und internen und/oder externen Datenendgeräten mit die nachrichtenabsendenden Endgeräte identifizierenden Daten abspeicherbar sind.

Aus EP-A-0 087 849 ist ein Übermittlungssystem für Fernsprechnachrichten mit zentralisierten Speichermitteln zur Abspeicherung der Nachrichten bekannt. Das System ermöglicht die Beantwortung abgehörter Nachrichten und die Übermittlung der abgehörten und beantworteten Nachrichten an Systembenutzer. Aus dieser Patenschrift ist ferner bekannt, sogenannte Audio-Nachrichten (z.B. Faksimile- und sonstige Daten; vgl. Seite 13, Zeilen 16 - 19) wie Fernsprechnachrichten zu behandeln. Das bekannte Übermittlungssystem erlaubt offenbar aber nur, gleichartige Nachrichten wie beispielsweise Fernsprechnachrichten oder Faksimiledaten zu beantworten.

Bekannte Kommunikationsnebenstellenanlagen, die den CCITT-Empfehlungen für das diensteintegrierende, digitale Fernmeldenetz (Integrated Service Digital Network ISDN) entsprechen, weisen beispielsweise sogenannte Einkanal-ISDN-Schnittstellen (B + D) und Doppelkanal-ISDN-Schnittstellen (B + B + D) auf. An die Einkanal-ISDN-Schnittstellen sind digitale Sprachendgeräte und an die Doppelkanal-ISDN-Schnittstellen sind einfunktionale Sprach- und/oder Datenendgeräte oder ein multifunktionales Endgerät anschließbar. Mit mindestens zwei einfunktionalen Endgeräten oder einem mulitifunktionalen Endgerät ist simultane Mehrfachkommunikation in der Weise möglich, daß zwischen zwei derartigen Nebenstellen beispielsweise während einer Fernsprechverbindung zusätzlich Daten zwischen kompatiblen Endgeräten beider Nebenstellen übertragbar sind. Eine solche Kommunikationsnebenstellenanlage ist aus der Produktschrift der Firma Siemens "HICOM 600 System Product Data", Bestell-Nummer A 19100-K3161-G430-01-7600 bekannt.

Die bekannte Kommunikationsnebenstelle kann ferner zentralisierte, den Nebenstellen zugeordnete Speichereinrichtungen aufweisen, in die Nachrichten von internen Nebenstellen und externen Endgeräten eingebbar und von den zugehörigen internen Nebenstellen abrufbar sind.

Aus AT&T TECHNOLOGY, Band 2, Nr. 3, 1987, Seiten 4-13 ist bereits eine Systemarchitektur mit Schnittstellen bekannt, die auf der Grundlage der Open Systems Interconnection (OSI) Reference Model- und der Integrated Services Digital Network (ISDN)-Protokolle realisiert sind. In diesem Zusammenhang wird eine sogenannte "Unified Messaging Architecture" beschrieben, die eine für den Benutzer vereinfachte Behandlung von Sprach/Daten ermöglicht.

Aus der internationalen Patentanmeldung WO-A-8 707 801 ist bereits ein als "Communication System having unified messaging" bezeichnetes System bekannt. Das vorbekannte Kommunikationssystem ermöglicht die Abspeicherung unterschiedlicher Nachrichtenarten in einer einzelnen elektronischen Speichereinrichtung (Mail Box), wobei auch eine Einzelnachricht aus unterschiedlichen Nachrichtenarten zusammengesetzt sein kann.

Der Erfindung liegt die Aufgabe zugrunde, ein Verfahren der eingangs genannten Art anzugeben, mit dem empfangene Nachrichten einer ersten Nachrichtenart, beispielsweise Sprachnachrichten, durch Nachrichten einer zweiten Nachrichtenart, beispielsweise Nichtsprachnachricht, ergänzt und beide Nachrichten dem Absender der ursprünglichen Nachricht übermittelt werden.

Die Lösung dieser Aufgabe erfolgt mit den Merkmalen des Patentanspruchs 1.

Die Erfindung zeichnet sich durch mehrere Vorteile aus. Die Bildung der aus Sprach- und Nichtsprachbestandteilen bestehenden Nachrichten erfolgt mittels auf dem Markt vorhandener monofunktionaler Endgeräte, wie digitale Sprach-Terminals und Daten-Terminals. Multifunktionale Endgeräte sind also weder beim Absender der ursprünglichen Nachricht noch beim Empfänger dieser Nachricht, der eine Antwortnachricht erstellt, erforderlich.

Als vorteilhaft erweist es sich auch, daß bei Nebenstellenanlagen, insbesondere bei ISDN-Nebenstellenanlagen und bei ISDN-Hauptanschlußteilnehmerendstellen ohnehin vorhandene Bedienfunktionen für das Verfahren gemäß der Erfindung übernommen werden können. Zu diesen Bedienfunktionen gehört beispielsweise im Zusammenhang mit dem Ein- und Ausspeichern von Nachrichten in zentralisierten Speichereinrichtungen die Einleitung, die Unterbrechung, die Korrektur und der Abschluß der Nachrichtenbildung und der Nachrichtenabruf.

Während im Vergleich zur Durchführung sogenannter elektronischer Post (Electronic Mail)-Verfahren jedoch für jede Kommunikationsart (Sprache, verschiedenartige Daten) unterschiedliche, als elektronische Briefkästen bezeichnete Speichereinrichtungen erforderlich sind, wird bei der Durchführung des Verfahrens gemäß der Erfindung nur eine Speichereinrichtung für die aus Sprach-und Nichtsprachbestandteilen bestehenden Nachrichten benötigt. Die Bildung und der Abruf kombinierter Nachrichten erfolgt systemintern nach einem einheitlichen Protokoll; Sprach- und Datennachrichten werden in einem Format mit Kennzeichnung der Sprach- und Datennachrichten einheitlich dargestellt und verwaltet.

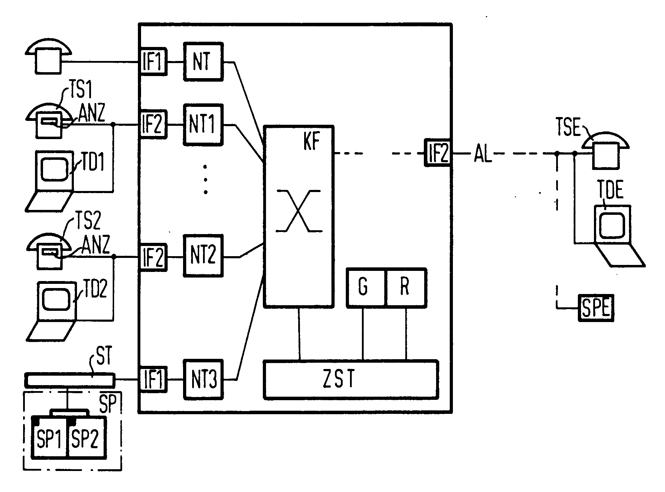

Das Verfahren und die Vorrichtung gemäß der Erfindung werden nun anhand der Figur beschrieben.

Die Figur zeigt eine schematische Darstellung einer Kommunikationsdienstvermittlungsanlage, insbesondere einer Fernmeldenebenstellenanlage. Dabei sind nur die für das Verständnis der Erfindung notwendigen Komponenten dargestellt. Die Anlage weist eine zentrale Steuerung ZST, ein Koppelfeld KF, Teilnehmeranschlußschaltungen NT1, NT2, NT3 und Schnittstellen IF auf. Die Schnittstellen IF sind beispielsweise als Einkanal-ISDN-Schnittstellen IF1 und als Doppelkanal-ISDN-Schnittstellen IF2 ausgebildet. An den Einkanal-ISDN-Schnittstellen IF1 sind digitale Sprachendgeräte bzw. Datenendgeräte anschaltbar. An die Doppelkanal-ISDN-Schnittstellen IF2 sind je ein digitales internes Sprachendgerät TS1, TS2 und ein internes Datenendgerät TD1, TD2 angeschaltet. An eine der in der Figur dargestellten Einkanal-ISDN-Schnittstellen IF1 ist eine Anordnung aus Speichereinrichtungen SP und einer den Speichereinrichtungen SP zugeordneten Steuerung ST angeschaltet, die auch als erste Steuerung bezeichnet wird. Die Speichereinrichtungen SP bestehen beispielsweise aus einer ersten und einer zweiten Speichereinrichtung SP1, SP2, in die Sprach- und Datennachrichten sowie die Nachrichten ergänzende Informationen wie beispielsweise nachrichtenabsendende Endgeräte identifizierende Daten abspeicherbar sind. Die erste Speichereinrichtung SP1 ist den Endgeräten TS1 und TD1 und die zweite Speichereinrichtung SP2 ist den Endgeräten TS2 und TD2 zugeordnet. Das erste interne Sprachendgerät TS1 und zweite interne Sprachendgerät TS2 können optische Anzeigeeinheiten ANZ aufweisen.

Der zentralen Steuerung ZST ist eine Einrichtung G zugeordnet, die ausgelöst durch entsprechende Befehle der zentralen Steuerung ZST von den Sprachendgeräten TS1, TS2 und den Datenendgeräten TD1, TD2 akustisch und/oder optisch umsetzbare Hinweise auf den Status der Sprach- und Datennachrichten als Teil einer kombinierten Sprach- und Datennachricht erzeugt. Der zentralen Steuerung ZST, die auch als zweite Steuerung bezeichnet wird, oder der ersten Steuerung ST ist eine Einrichtung R zugeordnet, die Rufnummernwählinformationen nachrichtenabsendender externer Endgeräte erzeugt.

Die Kommunikationsdienstvermittlungsanlage ist über mindestens eine Amtsleitung AL mit externen Sprachendgeräten TSE und externen Datenendgeräten TDE sowie alternatiy oder ergänzend hierzu mit externen Speichereinrichtungen SPE verbindbar, die dem externen Sprachendgerät TSE und dem externen Datenendgerät TDE zugeordnet sind.

Eine derartige Kommunikationsdienstvermittlungsanlage ist wie einleitend angegeben in ihrer Grundstruktur bekannt. Insoweit erübrigt sich sowohl eine detaillierte Darstellung der schaltungstechnischen Realisierung als auch eine Beschreibung der Vorgänge bei einem Verbindungsaufbau, Verbindungsabbau sowie der Abspeicherung und dem Abruf von Nachrichten aus den Speichereinrichtungen SP.

Von den in der Figur dargestellten Sprach- und Datenendgeräten der Kommunikationsdienstvermittlungsanlage sind an der Durchführung des Verfahrens gemäß der Erfindung nur diejenigen Sprach- und Datenendgeräte beteiligt, die über eine gemeinsame Teilnehmeranschlußschaltung NT und vorzugsweise über eine gemeinsame Doppelkanal-ISDN-Schnittstelle miteinander verbunden sind.

Mit einem Sprachendgerät oder einem Datenendgerät sind Befehle erzeugbar, die der zentralen Steuerung ZST der Kommunikationsdienstvermittlunganlage zugeführt werden. Die im Rahmen des Verfahrens gemäß der Erfindung von den Endgeräten erzeugten Befehle gelangen über eine Schnittstelle IF2, die Teilnehmeranschlußschaltung NT1, das Koppelfeld KF zu der zentralen Steuerung ZST. Die zentale Steuerung leitet die von den Endgeräten abgegebenen Befehle an die den Speichereinrichtungen SP zugeordnete Steuereinrichtung ST, die die zugeführten Befehle in definierter Weise zuführt. In dieser Weise können beide Steuerungen ZST und ST bei der Bildung und dem Abruf von Nachrichten zusammenwirken. Die Abwicklung der von den Steuerungen ZST und ST durchzuführenden Vorgänge ist durch ein entsprechendes Betriebsprogramm definiert, das in einem in der Figur nicht dargestellten Speicher abgelegt ist. Das Verfahren gemäß der Erfindung ist jedoch auch im öffentlichen Bereich, insbesondere zwischen ISDN-Hauptanschlüssen durchführbar. Zwischen den beteiligten Hauptanschlüssen werden vorzugsweise virtuelle, für eine zwischen den Hauptanschlüssen angeordnete Steuerung transparente Signalisierungsverbindungen ("user-to user-signaling") hergestellt. Insoweit erfolgt das Verfahren der Erfindung unabhängig von der zentralen Steuerung ZST.

Das Verfahren gemäß der Erfindung besteht aus den folgenden Schritten:
Von einem ersten internen Sprachendgerät TS1 oder von einem mit dem ersten Sprachendgerät TS1 über eine gemeinsame erste Teilnehmeranschlußschaltung NT1 verbundenen ersten Datenendgerät TD1 wird ein erster, den Abruf einer Sprach- oder Datennachricht aus der dem ersten internen Sprachendgerät TS1 und/oder der dem ersten internen Datenendgerät TD1 zugeordneten Speichereinrichtung SP1 kennzeichnender Befehl erzeugt. Dieser Befehl wird der den Speichereinrichtungen SP zugeordneten ersten Steuerung (ST) zugeführt.

Die den Speichereinrichtungen SP zugeordnete erste Steuerung ST führt ausgelöst durch den ersten Befehl dem diesen Befehl erzeugenden ersten internen Sprachendgerät TS1 oder dem diesen Befehl erzeugenden ersten internen Datenendgerät TD1 die Sprachoder Datennachricht sowie gegebenenfalls mit der jeweiligen Nachricht verbundene, das nachrichtenabsendende Endgerät identifizierenden Daten zu.

Von dem ersten internen Sprachendgerät TS1 oder dem ersten internen Datenendgerät TD1 wird mindestens ein zweiter, die Erstellung einer Sprach- oder Datennachricht und die Verknüpfung der er stellten Sprach- oder Datennachricht mit der zuvor zugeführten Sprach- oder Datennachricht kennzeichnender Befehl erzeugt und der ersten Steuerung ST zugeführt. Mit dem zweiten Befehl wird eines der Endgeräte TS1 oder TD1 ausgewählt, das durch die erste Steuerung ST an die erste Speichereinrichtung SP1 zur nachfolgenden Einspeicherung von Sprach- oder Datennachrichten angekoppelt wird. Diese erste Steuerung ST gibt also die Eingabe einer Sprach- oder Datennachricht in das erste interne, durch jeden zweiten Befehl ausgewählte Sprachendgerät TS1 oder Datenendgerät TD1 frei und speichert eine eingegebene Sprach- oder Datennachricht in die erste Speichereinrichtung SP1 ein. Mit den durch die zweiten Befehle eingegebenen Sprach-und Datennachrichten läßt sich die ursprünglich empfangene und von einem der Endgeräte TS1, TD1 abgerufene Nachricht beantworten.

Im Anschluß daran generiert die erste Steuerung ST ein die gemeinsame Übertragung der zuvor zugeführten und der eingegebenen Sprach- oder Datennachricht ermöglichendes Format. Die Übertragung erfolgt insbesondere an Speichereinrichtungen SP2, SPE der gleichen bzw. einer externen Kommunikationsdienstvermittlungsanlage oder an eine kompatible Kommunikationsdienstvermittlungsanlage.

Von dem ersten internen Sprachendgerät TS1 oder dem ersten internen Datenendgerät TD1 ist auch ein dritter Befehl erzeugbar, der der ersten Steuerung ST oder der mit dieser in Verbindung stehenden zweiten Steuerung ZST zugeführt wird. Die erste Steuerung ST oder die zweite Steuerung ZST greift ausgelöst durch den dritten Befehl auf die ein nachrichtenabsendendes Endgerät TSE, TDE identifizierende Daten und aktiviert die eine Rufnummernwählinformation erzeugende Einrichtung R in der Weise, daß diese Einrichtung eine den das nachrichtenabsendende Endgerät TS2; TSE; TD2; TDE identifizierende Daten entsprechende Rufnummernwählinformation erzeugt. Die Kommunikationsdienstvermittlungsanlage stellt eine Kommunikationsverbindung zu dem ursprünglich nachrichtenabsendenden Endgerät TSE, TDE oder zu einer diesem Endgerät TSE, TDE zugeordneten Speichereinrichtung SPE her und überträgt die ursprünglich zugeführte und die anschließend er stellte Sprach- und Datennachricht gemeinsam an das Endgerät TSE, TDE oder an die Speichereinrichtungen SPE.

Die ursprünglich in der ersten Speichereinrichtung SP1 zugegangene und zu beantwortende Nachricht kann auch von einem zweiten internen Sprachendgerät TS2 oder einem zweiten internen Datenendgerät TD2 zugeführt worden sein. Die Rückübertragung dieser Nachricht zusammen mit einer von dem ersten internen Sprachendgerät TS1 und/oder von dem ersten internen Datenendgerät TD1 erstellten Nachricht erfolgt dann zu dem zweiten internen Sprachendgerät TD2 und dem zweiten internen Datenendgerät TD2 bzw. an die diesen Endgeräten TS2, TD2 zugeordnete zweite Speichereinrichtung SP2.

Die Steuerung ST kann für jede in die erste Speichereinrichtung SP1 einzuspeichernde Sprach- und Datennachricht einen durch das erste Sprachendgerät TS1 oder Datenendgerät TD1 bzw. durch insoweit gleich strukturierte Endgeräte TS2, TD2, TSE, TDE umsetzbaren Hinweis auf den Status der betreffenden Sprach-oder Datennachricht als Teil einer kombinierten Sprach- und Datennachricht erzeugen. Sie bedient sich hierzu beispielsweise der Einrichtung G, die bei dem in der Figur dargestellten Ausführungsbeispiel unmittelbar der zentralen Steuerung ZST der Kommunikationsdienstvermittlungsanlage zugeordnet ist. Die Steuerung ST ordnet den gebildeten Hinweis der jeweiligen Sprach-und Datennachricht zu und speichert ihn eingefügt in ein Hinweis und Sprach- oder Datennachricht verbindendes Format und/oder von der jeweiligen Sprach- oder Datennachricht getrennt in die erste Speichereinrichtung SP1 ab. Der Hinweis besteht aus einer abhörbaren Ansage oder aus einer datenendgerätkonformen Anzeige und kann neben der zuvor genannten Statusinformation Informationen umfassen, die die betreffende Nachricht als Sprach- oder Datennachricht ausweisen, die die Anzahl der in der kombinierten Nachricht enthaltenen Sprach- und Datennachrichten angeben, die ferner in an sich bekannter Weise angeben, ob eine bestimmte Nachricht neu ist, d.h. noch nicht abgerufen wurde, oder nicht neu ist. Auch ist der Zeitpunkt der Hinterlegung der Nachrichten in der zugehörigen Speichereinrichtung anzeigbar. Ein Vorteil des erfindungsgemäßen Verfahrens besteht in diesem Zusammenhang nun darin, daß an einem Datenendgerät auch Hinweise zu Sprachnachrichten und daß an einem Sprachendgerät auch Hinweise zu Datennachrichten abrufbar und akustisch und/oder optisch darstellbar sind. Das Verfahren gemäß der Erfindung kann auch in der Weise ausgestaltet werden, daß die genannten Hinweise den Endgeräten selbsttätig, also ohne besonderen Abrufbefehl seitens eines Endgeräts zustellbar sind.

Die Steuerung ST kann ferner für jede in die erste Speichereinrichtung SP1 einzuspeichernde Sprach- und Datennachricht eine die Gesamtzahl der Sprach- und Datennachrichten und die Reihenfolge der jeweiligen Sprach- und Datennachricht bezeichnende Information erzeugen. Die Steuerung ST speichert die Reihenfolgeinformation in Zuordnung zu der jeweiligen Sprach- oder Datennachricht und die Gesamtzahlinformation in Zuordnung zur Gesamtnachricht in die erste Speichereinrichtung SP1 ab. Die Abspeicherung der Reihenfolge- und/oder Gesamtzahlinformation kann eingefügt in ein diese Information und die eigentliche Sprach-oder Datennachricht verbindendes Format und/oder von der jeweiligen Sprach- und Datennachricht getrennt erfolgen.

Nach Übertragung der von dem ersten Sprachendgerät TS1 und von dem ersten Datenendgerät TD1 erzeugten kombinierten Nachricht und gegebenenfalls des Statushinweises und der die Gesamtzahl und die Reihenfolge der Sprach- und Datennachrichten innerhalb der kombinierten Nachricht bezeichnenden Information von der ersten Speichereinrichtung SP1 zu einer Speichereinrichtung SP2, SPE oder unmittelbar zu kompatiblen Endgeräten sind die einzelnen Sprach- und Datennachrichten der kombinierten Nachricht durch Sprach- bzw. Datenendgeräte in an sich bekannter Weise abrufbar.

Der Anschluß der Endgeräte TS1 und TD1 beziehungsweise TS2 und TD2 an eine Doppelkanal-ISDN-Schnittstelle ermöglicht es, gleichzeitig beide Nutzdaten-"B"-Kanäle für die Bildung und den Abruf kombinierter Nachrichten auszunutzen. Die Bildung und der Abruf kombinierter Nachrichten kann alternativ hierzu auch mittels nur eines Nutzdaten-"B"-Kanals erfolgen, der endgeräteseitig oder durch die den Speichereinrichtungen SP zugeordnete Steuerung ST in der Weise umgeschaltet wird, daß entweder eine Verbindung zwischen Sprachendgerät und Steuerung ST oder eine Verbindung zwischen Datenendgerät und Steuerung ST gebildet wird. Die Endgeräte TS1 und TD1 bzw. TS2 und TD2 sind in diesem Fall auch an eine Einkanal-ISDN-Schnittstelle ankoppelbar.

## Patentansprüche

1. Verfahren zur Bildung elektronischer, aus Sprach- und Nichtsprachbestandteilen bestehender Kommunikationsdienstnachrichten in einer Kommunikationsdienstvermittlungsanlage mit internen Sprachendgeräten (TS) und internen Datenendgeräten (TD), wobei jeweils ein internes Sprachendgerät (TS) und mindestens ein internes Datenendgerät (TD) mit einer gemeinsamen internen Teilnehmeranschlußschaltung (NT) verbunden und über eine gemeinsame Rufnummer anwählbar sind, mit den internen Sprachendgeräten (TS) und den internen Datenendgeräten (TD) zugeordneten Speichereinrichtungen (SP, SP1, SP2, ...) und mit einer den Speichereinrichtungen zugeordneten ersten Steuerung (ST), wobei die Kommunikationsdienstvermittlungsanlage über mindestens eine Amtsleitung (AL) mit externen Sprachendgeräten (TSE) und externen Datenendgeräten (TDE) verbindbar ist, wobei in die Speichereinrichtungen (SP, SP1, SP2, ...) Sprach- und Datennachrichten von internen und/oder externen Sprachendgeräten (TS1, TS2; TSE) und internen und/oder externen Datenendgeräten (TD1, TD2; TDE) mit die nachrichtenabsendenden Endgeräte (TS1, TS2; TSE; TD1, TD2; TDE) identifizierenden Daten abspeicherbar sind,
**dadurch gekennzeichnet,** daß von einem ersten internen Sprachendgerät (TS1) oder von einem mit dem ersten 'sprachendgerät (TS1) über eine gemeinsame Teilnehmeranschlußschaltung (NT1) verbundenen ersten internen Datenendgerät (TD1) ein erster, den Abruf einer Sprach- oder Datennachricht aus der dem ersten internen Sprachendgerät (TS1) und/oder der dem ersten internen Datenendgerät (TD1) zugeordneten Speichereinrichtung (SP1) kennzeichnender Befehl erzeugt und der den Speichereinrichtungen (SP) zugeordneten ersten Steuerung (ST) zugeführt wird,
daß die den Speichereinrichtungen (SP) zugeordnete erste Steuerung (ST) dem ersten internen Sprachendgerät (TS1) oder dem ersten internen Datenendgerät (TD1) die Sprach- oder Datennachricht mit den das nachrichtenabsendende Endgerät (TS2; TSE; TD2; TDE) identifizierenden Daten zuführt,
daß von dem ersten internen Sprachendgerät (TS1) oder dem ersten internen Datenendgerät (TD1) mindestens ein zweiter, die Erstellung einer Sprach- oder Datennachricht und die Verknüpfung der erstellten Sprach- oder Datennachricht mit der zuvor zugeführten Sprach- oder Datennachricht kennzeichnender Befehl erzeugt und der ersten Steuerung (ST) zugeführt wird,
daß die erste Steuerung (ST) die Eingabe einer Sprach- oder Datennachricht in das erste interne, durch jeden zweiten Befehl ausgewählte Sprachendgerät (TS1) oder Datenendgerät (TD1) freigibt und eine eingegebene Sprach- oder Datennachricht in die erste Speichereinrichtung (SP1) einspeichert,
daß die erste Steuerung (ST) ein die gemeinsame Übertragung der zuvor zugeführten und der eingegebenen Sprach- und Datennachrichten ermöglichendes Format generiert.

2. Verfahren nach Anspruch 1,
**dadurch gekennzeichnet,** daß von dem ersten internen Sprachendgerät (TS1) oder dem ersten internen Datenendgerät (TD1) ein dritter Befehl erzeugt wird und der ersten Steuerung (ST) oder einer mit dieser in Verbindung stehenden zweiten Steuerung (ZST) zugeführt wird,
daß die erste Steuerung (ST) oder die zweite Steuerung (ZST) ausgelöst durch den dritten Befehl auf die ein nachrichtenabsendendes Endgerät (TSE; TDE) identifizierende Daten zugreift und eine Rufnummernwählinformation erzeugende Einrichtung (R) in der Weise aktiviert, daß diese Einrichtung eine den das nachrichtenabsendende Endgerät (TS2; TSE; TD2; TDE) identifizierende Daten entsprechende Rufnummernwählinformation erzeugt,
daß die erste Steuerung (ST) oder die zweite Steuerung (ZST) nach Herstellung einer Kommunikationsverbindung zu dem ursprünglich nachrichtenabsendenden Endgerät (TSE; TDE) oder zu einer diesem Endgerät (TSE; TDE) zugeordneten Speichereinrichtung (SPE) die ursprünglich zugeführte und die anschließend erstellte Sprach- und Datennachricht aus den Speichereinrichtungen (SP) abruft und die Nachrichten gemeinsam an das ursprünglich nachrichtenabsendende Endgerät (TSE; TDE) oder an eine diesem zugeordnete Speichereinrichtung (SPE) überträgt.

3. Verfahren nach Anspruch 1 oder 2,
**dadurch gekennzeichnet,** daß die erste Steuerung (ST) ausgelöst durch die erstmalige Aufnahme eines zweiten Befehls für jede in die erste Speichereinrichtung (SP1) gespeicherte und mit einer weiteren Sprach- oder Datennachricht zu verknüpfende Sprach- und Datennachricht einen durch das erste Sprachendgerät (TS1) oder Datenendgerät (TD1) umsetzbaren Hinweis auf den Status der betreffenden Sprach- oder Datennachricht als Teil einer kombinierten Sprach- und Datennachricht erzeugt, diesen Hinweis in die jeweilige Sprach- oder Datennachricht einfügt und/oder von der jeweiligen Sprach- oder Datennachricht getrennt in die erste Speichereinrichtung (SP1) abspeichert.

4. Verfahren nach Anspruch 2 und 3,
**dadurch gekennzeichnet,** daß die erste Steuerung (ST) ausgelöst durch die erstmalige Aufnahme eines zweiten Befehls für jede in die erste Speichereinrichtung (SP1) eingespeicherte und mit einer weiteren Sprach- und Datennachricht zu verknüpfende Sprach- und Datennachricht eine die Gesamtzahl der Sprach- und Datennachrichten und die Reihenfolge der jeweiligen Sprach- oder Datennachricht innerhalb der kombinierten Nachricht bezeichnende Information erzeugt, diese Information in die jeweilige Sprach- und Datennachricht einfügt und/oder von der jeweiligen Sprach- und Datennachricht getrennt in die erste Speichereinrichtung (SP1) abspeichert.

5. Anordnung zur Bildung elektronischer, aus Sprach- und Nichtsprachbestandteilen bestehender Kommunikationsdienstnachrichten, bestehend aus einer Kommunikationsdienstvermittlungsanlage mit Einkanal- und/oder Doppelkanal-Schnittstellen (IF1, IF2), Teilnehmeranschlußschaltungen (NT1, NT2, NT3), Koppelfeld (KF) und zentraler Steuerung (ZST), aus einem ersten internen Sprachendgerät (TS1), das mit einem ersten internen Datenendgerät (TD1) über eine gemeinsame Einkanal-Schnittstelle (IF1) oder eine gemeinsame Doppelkanal-Schnittstelle (IF2) und eine Teilnehmeranschlußschaltung (NT1) verbunden ist,
**dadurch gekennzeichnet,**
daß die Anordnung eine erste Speichereinrichtung (SP1) und eine dieser unmittelbar zugeordneten weiteren Steuerung (ST) aufweist, der ein in dieser Weise ausgestaltetes Steuerungsprogramm zugeordnet ist,
daß die weitere Steuerung (ST) dem ersten internen Sprachendgerät (TSI) oder dem ersten internen Datenendgerät (TD1) Sprach- oder Datennachrichten mit ein nachrichtenabsendendes Endgerät (TS2;TSE; TD2;TDE) identifizierenden Daten zuführt, daß von dem ersten internen Sprachendgerät (TS1) oder dem ersten internen Datenendgerät (TD1) mindestens ein zweiter, die Erstellung einer Sprach- oder Datennachricht und die Verknüpfung der erstellten Sprach- oder Datennachricht mit der zuvor zugeführten Sprach- oder Datennachricht kennzeichnender Befehl erzeugt und der weiteren Steuerung (ST) zugeführt wird, daß die weitere Steuerung (ST) die Eingabe einer Sprach- oder Datennachricht in das erste interne, durch jeden zweiten Befehl ausgewählte Sprachendgerät (TS1) oder Datenendgerät (TD1) freigibt und eine eingegebene Sprach- oder Datennachricht in die erste Speichereinrichtung (SP1) einspeichert und daß die weitere Steuerung (ST) ein die gemeinsame Übertragung der zuvor zugeführten und der eingegebenen Sprach- und Datennachrichten ermöglichendes Format generiert.

6. Anordnung nach Anspruch 5,
**dadurch gekennzeichnet,**
daß mindestens eine der beiden Steuerungen (ZST, ST) Zugriff auf einer Einrichtung (G) hat, die ausgelöst durch Befehle einer der beiden Steuerungen (ZST, ST) von Sprachendgeräten (TS1, TS2, TSE) und Datenendgeräten (TD1, TD2, TDE) umsetzbare Hinweise auf den Status der betreffenden Sprach- oder Datennachrichten als Teil einer kombinierten Sprach- und Datennachricht erzeugt.

7. Anordnung nach Anspruch 5 oder 6,
**dadurch gekennzeichnet,** daß mindestens eine der beiden Steuerungen (ZST, ST) Zugriff auf eine Einrichtung (R) hat, die ausgelöst durch Befehle einer der beiden Steuerungen (ZST, ST) und durch endgeräteidentifizierende Daten entsprechende Rufnummernwählinformationen erzeugt.

## Claims

1. Method for forming electronic communication service messages composed of speech and non-speech components in a communication service exchange having internal voice terminals (TS) and internal data terminals (TD), in which in each case one internal voice terminal (TS) and at least one internal data terminal (TD) are connected to a common internal subscriber line circuit (NT) and can be dialled via a common call number, having storage devices (SP, SP1, SP2, ...) assigned to the internal voice terminals (TS) and the internal data terminals (TD), and having a first controller (ST) assigned to the storage devices, in which the communication service exchange can be connected to external voice terminals (TSE) and external data terminals (TDE) via at least one trunk line (AL), in which it is possible to store in the storage devices (SP, SP1, SP2, ...) speech and data messages from internal and/or external voice terminals (TS1, TS2; TSE) and internal and/or external data terminals (TD1, TD2; TDE) with data identifying the message-sending terminals (TS1, TS2; TSE; TD1, TS2; TDE), characterized
in that a first command signifying the call up of a speech or data message from the storage device (SP1) assigned to the first internal voice terminal (TS1) and/or from the storage device (SP1) assigned to the first internal data terminal (TD1) is generated by a first internal voice terminal (TS1) or by a first internal data terminal (TD1) connected to the first voice terminal (TS1) via a common subscriber line circuit (NT1), and is supplied to the first controller (ST) assigned to the storage devices (SP),
in that the first controller (ST) assigned to the storage devices (SP) supplies the speech or data message with the data identifying the message-sending terminal (TS2; TSE; TD2; TDE) to the first internal voice terminal (TS1) or the first internal data terminal (TD1),
in that at least one second command signifying the creation of a speech or data message and the combination of the speech or data message created with the previously supplied speech or data message is generated by the first internal voice terminal (TS1) or the first internal data terminal (TD1) and is supplied to the first controller (ST),
in that the first controller (ST) enables the input of a speech or data message into the first internal voice terminal (TS1) or data terminal (TD1) selected by every second command and stores an input speech or data message in the first storage device (SP1),
and in that the first controller (ST) generates a format permitting the common transmission of the previously supplied and the input speech and data messages.

2. Method according to Claim 1, characterized in that a third command is generated by the first internal speech terminal (TS1) or the first internal data terminal (TD1) and is supplied to the first controller (ST) or to a second controller (ZST) which is in communication with the latter,
in that, triggered by the third command, the first controller (ST) or the second controller (ZST) accesses the data identifying a message-sending terminal (TSE; TDE) and activates a device (R) generating call number dialling information in such a way that said device generates call number dialling information corresponding to the data identifying the message-sending terminal (TS2; TSE; TD2; TDE),
and in that, after a communication link to the original message-sending terminal (TSE; TDE) or to a storage device (SPE) assigned to said terminal (TSE; TDE) has been established, the first controller (ST) or the second controller (ZST) calls up the originally supplied and the subsequently created speech and data message from the storage devices (SP) and transmits the messages together to the original message-sending terminal (TSE; TDE) or to a storage device (SPE) assigned thereto.

3. Method according to Claim 1 or 2, characterized in that, triggered by the first reception of a second command for each speech and data message stored in the first storage device (SP1) and to be combined with a further speech or data message, the first controller (ST) generates a notification of the status of the respective speech or data message as part of a combined speech and data message, which notification can be converted by the first voice terminal (TS1) or data terminal (TD1), inserts said notification into the respective speech or data message and/or stores it in the first storage device (SP1) separately from the respective speech or data message.

4. Method according to Claim 2 and 3, characterized in that, triggered by the first reception of a second command for each speech and data message stored in the first storage device (SP1) and to be combined with a further speech and data message, the first controller (ST) generates information indicating the total number of speech and data messages and the order of the respective speech or data message within the combined message, inserts said information into the respective speech and data message and/or stores it in the first storage device (SP1) separately from the respective speech and data message.

5. Arrangement for forming electronic communication service messages composed of speech and non-speech components, consisting of a communication service exchange with single-channel and/or double-channel interfaces (IF1, IF2), subscriber line circuits (NT1, NT2, NT3), switching network (KF) and central controller (ZST), of a first internal voice terminal (TS1) which is connected to a first internal data terminal (TD1) via a common single-channel interface (IF1) or a common double-channel interface (IF2) and a subscriber line circuit (NT1), characterized
in that the arrangement has a first storage device (SP1) and a further controller (ST) assigned directly thereto, to which a control program designed in this manner is assigned,
in that the further controller (ST) supplies speech or data messages with data identifying a message-sending terminal (TS2; TSE; TD2; TDE) to the first internal voice terminal (TS1) or the first internal data terminal (TD1), in that at least one second command signifying the creation of a speech or data message and the combining of the created speech or data message with the previously supplied speech or data message is generated by the first internal voice terminal (TS1) or the first internal data terminal (TD1) and is supplied to the further controller (ST),
in that the further controller (ST) enables the input of a speech or data message into the first internal voice terminal (TS1) or data terminal (TD1) selected by every second command and stores an input speech or data message in the first storage device (SP1),
and in that the further controller (ST) generates a format permitting the common transmission of the previously supplied and the input speech and data messages.

6. Arrangement according to Claim 5, characterized in that at least one of the two controllers (ZST, ST) has access to a device (G) which, triggered by commands of one of the two controllers (ZST, ST), generates notifications of the status of the respective speech or data messages as part of a combined speech and data message, which notification can be converted by voice terminals (TS1, TS2, TSE) and data terminals (TD1, TD2, TDE).

7. Arrangement according to Claim 5 or 6, characterized in that at least one of the two controllers (ZST, ST) has access to a device (R) which, triggered by commands of one of the two controllers (ZST, ST) and by terminal-identifying data, generates corresponding call number dialling information.

## Revendications

1. Procédé pour former des messages électroniques de service de communication, constitués de composantes vocale et non vocale, dans une installation de commutation de service de communication comportant des terminaux vocaux internes (TS) et des terminaux internes de transmission de données (TD), selon lequel un terminal vocal interne (TS) et au moins un terminal interne de transmission de données (TD) sont reliés à un circuit interne commun de raccordement d'abonné (NT) et peuvent être sélectionnés par un numéro d'appel commun, et il est prévu des dispositifs de mémoire (SP,SP1,SP2,...) associés aux terminaux vocaux internes (TS) et aux terminaux internes de transmission de données (TD), et une première unité de commande (ST) associée aux dispositifs de mémoire, et selon lequel l'installation de commutation de service de communication peut être reliée, par l'intermédiaire d'au moins une ligne de service (AL), à des terminaux vocaux externes (TSE) et à des terminaux externes de transmission de données (TDE), et selon lequel, dans les dispositifs de mémoire (SP,SP1,SP2,...), peuvent être mémorisés des messages vocaux et des messages de données de terminaux vocaux internes et/ou externes (TS1,TS2; TSU) et de terminaux vocaux internes et/ou externes de transmission de données (TD1,TD2; TDE), ainsi que des données identifiant les terminaux (TS1,TS2; TSE; TD1,TD2; TDE) qui émettent des messages,
caractérisé par le fait qu'une première instruction, qui caractérise l'appel d'un message vocal ou d'un message de données du dispositif de mémoire (SP1) associé au premier terminal vocal interne (TS1) et/ou au premier terminal interne de transmission de données (TD1), est produite par un premier terminal vocal interne (TS1) ou par un premier terminal interne de transmission de données (TD1), qui est relié au premier terminal vocal interne (TS1), par l'intermédiaire d'un circuit commun de raccordement d' abonné (NT1), et est envoyée à la première unité de commande (ST) qui est associée aux dispositifs de mémoire (SP),
que la première unité de commande (ST), associée aux dispositifs de mémoire (SP), envoie au premier terminal vocal interne (TS1) ou au premier terminal interne de transmission de données (TD1), le message vocal ou le message de données avec les données identifiant le terminal (TS2; TSE; TD2; TDE) qui émet le message,
qu'au moins une deuxième instruction, qui caractérise l'établissement d'un message vocal ou d'un message de données et la combinaison du message vocal ou du message de données établi avec le message vocal ou le message de données envoyé précédemment, est produite par le premier terminal vocal interne (TS1) ou par le premier terminal interne de transmission de données (TD1) et est envoyée à la première unité de commande (ST),
que la première unité de commande (ST) libère l'introduction d'un message vocal ou d'un message de données dans le premier terminal vocal interne (TS1) ou dans le premier terminal interne de transmission de données (TD1), qui est sélectionné par chaque deuxième instruction, et mémorise, dans le premier dispositif de mémoire (SP1), un message vocal ou un message de données introduit,
que la première unité de commande (ST) produit un format qui permet la transmission commune des messages vocaux et des messages de données envoyés au préalable et des messages vocaux et des messages de données introduits.

2. Procédé suivant la revendication 1, caractérisé par le fait qu'une troisième instruction est produite par le premier terminal vocal interne (TS1) ou par le premier terminal interne de transmission de données (TD1) et est envoyée à la première unité de commande (ST) ou à une deuxième unité de commande (ZST) reliée à la précédente, que la première unité de commande (ST) ou la deuxième unité de commande (ZST) accède, avec déclenchement par la troisième instruction, aux données identifiant un terminal (TSE; TDE) émettant des messages, et active un dispositif (R), qui produit une information de sélection de numéro d'appel, de telle sorte que ce dispositif produit une information de sélection de numéro d'appel, qui correspond aux données identifiant le terminal (TS2; TSE; TD2; TDE) qui émet le message,
que la première unité de commande (ST) ou la deuxième unité de commande (ZST) appelle le message vocal et le message de données, envoyés à l'origine, et le message vocal et le message de données, établis ultérieurement, à partir des dispositifs de mémoire (SP), après l'établissement d'une liaison de communication avec le terminal (TSE; TDE) qui a émis initialement le message, ou avec un dispositif de mémoire (SPE) associé à ce terminal (TSE; TDE), et transmet les messages en commun au terminal (TSE; TDE) qui a émis initialement le message ou à un dispositif de mémoire (SPE) associé à ce terminal.

3. Procédé suivant la revendication 1 ou 2, caractérisé par le fait que la première unité de commande (ST) produit, avec déclenchement par la première réception d'une deuxième instruction, pour chaque message vocal et pour chaque message de données, mémorisés dans le premier dispositif de mémoire (SPE) et devant être combinés à un autre message vocal ou à un autre message de données, une indication, qui peut être convertie par le premier terminal vocal (TS1) ou par le premier terminal de transmission de données (TD1) et qui concerne l'état du message vocal ou du message de données considéré, en tant que partie d'un message vocal et d'un message de données combinés, introduit cette indication dans le message vocal ou dans le message de données respectif et/ou mémorise cette indication dans le premier dispositif de mémoire (SP1), séparément du message vocal ou du message de données respectif.

4. Procédé suivant la revendication 2 ou 3, caractérisé par le fait que la première unité de commande (ST) produit, avec déclenchement par la première réception d'une deuxième instruction, pour chaque message vocal et pour chaque message de données, qui sont mémorisés dans le premier dispositif de mémoire (SP1) et qui doivent être combinés à un autre message vocal et à un autre message de données, une information, qui désigne le nombre total des messages vocaux et des messages de données et la séquence du message vocal ou du message de données respectif à l'intérieur du message combiné, introduit cette information dans le message vocal et dans le message de données respectif et/ou mémorise cette information dans le premier dispositif de mémoire (SP1), séparément du message vocal et du message de données respectifs.

5. Dispositif destiné à former des messages électroniques de service de communication, formés de composantes vocale et non vocale, constitué d'une installation de commutation de service de communication comportant des interfaces (IF1,IF2) à canal unique et/ou à canal double, des circuits de raccordement d'abonnés (NT1, NT2, NT3), un champ de couplage (KF) et une unité de commande centrale (ZST), et d'un premier terminal vocal interne (TS1), qui est relié à un premier terminal interne de transmission de données (TD1), par l'intermédiaire d'une interface commune (IF1) à canal unique ou par l'intermédiaire d'une interface (IF2) commune à canal double d'un circuit de raccordement d'abonné (NT1),
caractérisé par le fait
que le dispositif comporte un premier dispositif de mémoire (SP1) et une autre unité de commande (ST) qui est associée directement à ce dispositif de mémoire et à laquelle est associé un programme de commande tel
que l'autre unité de commande (ST) envoie au premier terminal vocal interne (TS1) ou au premier terminal interne de transmission de données (TD1), des messages vocaux ou des messages de données comportant des données identifiant un terminal (TS2; TSE; TD2; TDE), qui émet des messages,
qu'au moins une deuxième instruction, qui caractérise l'établissement d'un message vocal ou d'un message de données et la combinaison du message vocal ou du message de données établi avec le message vocal ou le message de données envoyé auparavant, est produite par le premier terminal vocal interne (TS1) ou par le premier terminal interne de transmission de données (TD1),
que l'autre unité de commande (ST) libère l'introduction d'un message vocal ou d'un message de données dans le premier terminal vocal interne (TS1) ou dans le premier terminal de transmission de données (TD1), sélectionné par chaque deuxième instruction, et mémorise dans le premier dispositif de mémoire (SP1) un message vocal ou un message de données introduit, et
que l'autre unité de commande (ST) produit un format permettant la transmission commune des messages vocaux et des messages de données, envoyés auparavant et des messages vocaux et des messages de données introduits.

6. Dispositif suivant la revendication 5, caractérisé par le fait qu'au moins une des deux unités de commande (ZST,ST) a accès à un dispositif (G), qui produit, avec déclenchement par des introductions de l'une des deux unités de commande (ZST,ST), des indications qui peuvent être converties par des terminaux vocaux (TS1,TS2, TSE) et des terminaux de transmission de données (TD1,TD2, TDE) et qui concernent l'état des messages vocaux ou des messages de données considérés, en tant que partie d'un message vocal et d'un message de données combinés.

7. Dispositif suivant la revendication 5 ou 6, caractérisé par le fait qu'au moins une des deux unités de commande (ZST,ST) a accès à un dispositif (R) qui produit, avec déclenchement par des instructions de l'une des deux unités de commande (ZST,ST) et par des données identifiant le terminal, des informations correspondantes de sélection de numéros d'appel.
